# EUROPÄISCHE PATENTSCHRIFT

(11) **EP 3 399 339 B1**
(45) Veröffentlichungstag und Bekanntmachung des Hinweises auf die Patenterteilung: **22.06.2022**
(21) Anmeldenummer: 18168371.5
(22) Anmeldetag: 20.04.2018
(51) Int. Cl.: G01S 17/931, G01S 7/497, G01S 7/481

(54) **SENSORANORDNUNG FÜR EIN KRAFTFAHRZEUG, KRAFTFAHRZEUG SOWIE VERFAHREN ZUM BETREIBEN EINER SENSOREINRICHTUNG**
MOTOR VEHICLE AND SENSOR ASSEMBLY FOR A MOTOR VEHICLE, METHOD FOR OPERATING SAME
DISPOSITIF CAPTEUR POUR UN VÉHICULE AUTOMOBILE, VÉHICULE AUTOMOBILE AINSI QUE PROCÉDÉ DE FONCTIONNEMENT D'UN DISPOSITIF CAPTEUR

(30) Priorität: 26.04.2017 DE 102017207024
(43) Veröffentlichungstag der Anmeldung: 07.11.2018
(73) Patentinhaber: AUDI AG, 85045 Ingolstadt (DE)
(72) Erfinder: Brok, Tobias, 85092 Kösching (DE)

(56) Entgegenhaltungen:
- EP-A2- 1 605 729
- WO-A1-2013/131700
- DE-A1-102005 055 349
- DE-A1-102007 035 905
- DE-A1-102014 220 431
- DE-A1-102015 220 575
- DE-A1-102016 208 771

## Beschreibung

Die Erfindung betrifft eine Sensoranordnung für ein Kraftfahrzeug mit einer Scheibe, einem Sensorgehäuse und einem optischen Sensor. Das Sensorgehäuse ist an einer Seite der Scheibe derart angeordnet, dass zwischen dem Sensorgehäuse und der Scheibe ein Zwischenraum gebildet ist, in welchem der optische Sensor angeordnet ist. Die Erfindung betrifft außerdem ein Kraftfahrzeug mit einer solchen Sensoranordnung und ein Verfahren zum Betreiben einer Sensoranordnung für ein Kraftfahrzeug.

Fahrerassistenzsysteme zum Unterstützen des Fahrers eines Kraftfahrzeugs werden immer leistungsfähiger und eigenständiger. Ziel ist es, die Sicherheit bei einer Fahrt des Kraftfahrzeugs durch frühzeitiges Erkennen von Gefahrensituationen und Eingreifen in die Fahrt des Kraftfahrzeugs oder Warnen des Fahrers zu erhöhen. Zum Betreiben eines Fahrerassistenzsystems sind häufig optische Sensoren, beispielsweise Kameras, Lidar-Sensoren oder Infrarotsensoren, zum Versorgen des Fahrerassistenzsystems mit Umweltinformationen vorgesehen.

Die DE 10 2014 220 431 A1 stellt ein Verfahren zur Beseitigung von wetterbedingten Ablagerungen, insbesondere Feuchtigkeit, an einem Kamerasichtfenster für eine Kamera eines Fahrzeugs bereit. Die Kamera und ein Radarsensor bilden hierbei eine Baugruppe und mittels des Radarsensors wird eine Radarstrahlung mit einer Frequenz erzeugt, die einer Anregungsfrequenz von Wassermolekülen entspricht.

Um zu vermeiden, dass ein optischer Sensor, der hinter einer Scheibe angeordnet ist, aufgrund eines Beschlagens oder einer Vereisung der Scheibe nicht einsatzbereit ist, stellt die EP 1 605 729 A2 ein elektrisch beheizbares Fenster bereit, an welches der optische Sensor angeordnet werden kann. Eine Eintrittsfläche des Fensters, durch welche ein optisches Signal auf den optischen Sensor trifft, ist hierzu mit einem elektrisch leitfähigen Film überzogen.

Die Idee, das Vereisen oder Beschlagen der Scheibe durch elektrische Beheizung zu vermeiden, wird durch die DE 10 2007 035 905 A1 weitergebildet. Darin ist offenbart, dass ein kapazitiver Sensor einerseits zur Detektion von Feuchtigkeit und andererseits zum Beheizen der Scheibe ausgebildet ist.

Die DE 10 2015 220 575 A1 offenbart eine Kameravorrichtung, welche an einer Windschutzscheibe eines Fahrzeugs von der Innenseite angeordnet ist und ein erstes sowie ein zweites thermisch leitfähiges Bauteil enthält.

Die WO 2013/131 700 A1 beschreibt eine Scheibenanordnung mit einer elektrisch beheizbaren Streulichtblende.

Üblicherweise werden elektrische beziehungsweise aktive Mittel zur Beheizung der Scheibe erst beim Einschalten der Zündung des Kraftfahrzeugs und somit kurz vor Fahrtantritt aktiviert. Somit kann nicht gewährleistet werden, dass die Scheibe beim Losfahren rechtzeitig eisfrei beziehungsweise beschlagsfrei ist.

Es ist Aufgabe der vorliegenden Erfindung, ein Enteisen der Scheibe in einem Bereich des Sensorgehäuses auf besonders einfache und somit kostengünstige Art und Weise zu ermöglichen.

Die Erfindung beruht auf der Erkenntnis, dass aufgrund der Anordnung des Sensorgehäuses an der Scheibe eine ausreichende Luftzirkulation zum Beheizen der Scheibe im Bereich des optischen Sensors nicht möglich ist. Wenn es sich bei der Scheibe beispielsweise um eine Frontscheibe handelt, kann warme Luft aus einem Gebläse zum Enteisen der Frontscheibe nicht oder nur schlecht um die Scheibe im Bereich des optischen Sensors zirkulieren. Die Erfindung löst das Problem durch ein Wärmeleitelement, welches an derselben Seite der Scheibe wie der optische Sensor angeordnet ist. Das Wärmeleitelement ist geeignet, Wärme aus einem Innenraum des Kraftfahrzeugs in den Bereich der Scheibe, in dem der optische Sensor angeordnet ist, insbesondere in den Zwischenraum zwischen Scheibe und optischen Sensor, zu leiten. Der Innenraum des Kraftfahrzeugs kann insbesondere durch eine Standheizung bereits vor Fahrtantritt aufgeheizt werden. Das Wärmeleitelement ermöglicht somit insbesondere eine indirekte Enteisung der Scheibe im Bereich des optischen Sensors mittels der Standheizung.

Die Sensoranordnung für das Kraftfahrzeug umfasst somit die Scheibe, ein Sensorgehäuse und einen optischen Sensor, wobei das Sensorgehäuse an einer Seite der Scheibe derart angeordnet ist, dass zwischen dem Sensorgehäuse und der Scheibe ein Zwischenraum gebildet ist, in welchem der optische Sensor angeordnet ist. Bei der Scheibe handelt es sich bevorzugt um eine Frontscheibe beziehungsweise Windschutzscheibe oder eine Heckscheibe des Kraftfahrzeugs. Der optische Sensor ist vorzugsweise als Kamera, Lidar-Sensor oder Infrarotsensor ausgeführt. Der Sensor ist vorzugsweise derart angeordnet, dass ein optisches Signal durch die Scheibe hindurch zuerst in den Zwischenraum und dann auf den Sensor fällt.

Um nun das Enteisen der Scheibe auf besonders einfache und somit kostengünstige Art und Weise zu ermöglichen, ist erfindungsgemäß vorgesehen, dass zwischen dem Sensorgehäuse und der Seite der Scheibe ein Wärmeleitelement angeordnet ist, um Wärme von außerhalb des Sensorgehäuses zwischen das Sensorgehäuse und die Scheibe zu leiten. Mit anderen Worten ist das Wärmeleitelement auf derselben Seite der Scheibe wie das Sensorgehäuse angeordnet. Das Wärmeelement kann dazu ausgebildet sein, die Wärme von außerhalb des Sensorgehäuses in den Bereich der Scheibe zu leiten, in dem das Sensorgehäuse an der Scheibe angeordnet ist. Das Wärmeleitelement kann formschlüssig mit der Scheibe verbunden sein und/oder kraftschlüssig zwischen Scheibe und Sensorgehäuse gehalten sein. Vorzugsweise ist das Wärmeleitelement passiv ausgeführt, das bedeutet es ist nicht elektrisch beheizbar. Dabei weist die gesamte Sensoreinrichtung kein Heizelement auf, an welches allein zu Heizzwecken eine elektrischen Spannung angelegt werden kann.

Es ist vorgesehen, dass der Zwischenraum durch das Sensorgehäuse, die Scheibe und das Wärmeleitelement abgedichtet ist. Mit anderen Worten ist der optische Sensor, der in dem Zwischenraum angeordnet ist, von einem Bereich außerhalb des Sensorgehäuses abgetrennt. Somit kann kein Luftaustausch zwischen dem Zwischenraum und dem Bereich außerhalb des Sensorgehäuses stattfinden. Auf diese Weise kann vermieden werden, dass sich Feuchtigkeit aus dem Bereich außerhalb des Sensorgehäuses, beispielsweise dem Innenraum des Kraftfahrzeugs, an der Scheibe im Bereich des optischen Sensors niederschlägt. Durch das Wärmeleitelement ist dennoch Transport von Wärme von außerhalb des Gehäuses in den Zwischenraum beziehungsweise an die Scheibe im Bereich des optischen Sensors möglich.

Insbesondere ist vorgesehen, dass ein Material, insbesondere Metall, aus dem das Wärmeleitelement gebildet ist, einen größeren Wärmeleitkoeffizienten als ein Material, aus dem die Scheibe gebildet ist, aufweist. Somit kann durch das Wärmeleitelement die Wärmeleitung von außerhalb des Gehäuses in den Zwischenraum beziehungsweise zwischen das Sensorgehäuse und die Scheibe gegenüber der Wärmeleitung allein durch die Scheibe verbessert werden. Vorzugsweise ist das Wärmeleitelement zumindest teilweise aus Metall gebildet. Metall ermöglicht eine besonders einfache Verarbeitung des Wärmeleitelements bei gleichzeitig hoher Wärmeleitfähigkeit.

Eine Weiterbildung sieht vor, dass das Wärmeleitelement intransparent ist. Somit kann beispielsweise vermieden werden, dass das optische Signal durch das Wärmeleitelement hindurch tritt. Auf diese Weise kann beispielsweise ein Erfassungsbereich des optischen Sensors eingeschränkt werden. Somit erfüllt das Wärmeleitelement eine Doppelfunktion einerseits zum Definieren des Erfassungsbereich des optischen Sensors und andererseits zum Enteisen der Scheibe durch Wärmeleitung.

Eine Weiterbildung sieht vor, dass das Wärmeleitelement als Blickschutz ausgebildet ist, welches einen Blick durch die Scheibe nur bereichsweise verhindert. Mit anderen Worten ist das Wärmeleitelement blickdicht. Hierzu kann das Wärmeleitelement intransparent für Licht im für den Menschen sichtbaren Spektralbereich sein. Auf diese Weise kann das Wärmeleitelement als Verzierung an der Scheibe angeordnet sein. Außerdem kann das Wärmeelement dazu ausgebildet sein, den Zwischenraum und/oder das Kameragehäuse zumindest teilweise vor Blicken zu verbergen.

Eine Weiterbildung sieht vor, dass das Wärmeleitelement auf die Seite der Scheibe aufgedampft ist. Mit anderen Worten ist das Wärmeleitelement auf der Seite der Scheibe aufgedampft, an welcher das Sensorgehäuse angeordnet ist. Durch Aufdampfen des Wärmeleitelements kann dies auf besonders einfache Weise an der Scheibe angeordnet werden. Besonders vorteilhaft ist das Aufdampfen des Wärmeleitelements im Falle eines metallischen Wärmeleitelements.

Eine Weiterbildung sieht vor, dass der optische Sensor ausgebildet ist, ein optisches Signal, insbesondere Licht, welches durch die Eintrittsfläche der Scheibe auf den optischen Sensor fällt, zu erfassen, wobei die Eintrittsfläche von dem Wärmeleitelement ausgespart ist. Insbesondere ist die Eintrittsfläche von dem Wärmeleitelement ausgespart, um eine besonders hohe Erfassungsqualität des optischen Signals durch den optischen Sensor zu gewährleisten. Insbesondere ist das Wärmeleitelement in diesem Fall intransparent, sodass durch die Größe, Form und Lage der Eintrittsfläche der Erfassungsbereich des optischen Sensors vorgegeben ist. Die Eintrittsfläche kann dabei klein genug sein, dass diese trotz der Aussparung des Wärmeleitelements enteist wird, beispielsweise aufgrund der geringen Wärmeleitfähigkeit der Scheibe.

Eine Weiterbildung sieht vor, dass die Eintrittsfläche ein weiteres, transparentes Wärmeleitelement aufweist. Insbesondere ist das weitere, transparente Wärmeleitelement in der Aussparung des Wärmeleitelement angeordnet. Somit ist auch die Eintrittsfläche thermisch an das Wärmeleitelement angekoppelt. Auf diese Weise kann die Enteisung der Scheibe im Bereich des Gehäuses besonders gut erfolgen.

Ein zweiter Aspekt der Erfindung betrifft ein Kraftfahrzeug mit einer Sensoranordnung der oben genannten Art. Dabei ist das Sensorgehäuse mit dem optischen Sensor bezogen auf das Kraftfahrzeug auf einer Innenseite der Scheibe angeordnet. Somit ist das Wärmeleitelement auf der Innenseite an der Scheibe angeordnet. Durch die Eintrittsfläche kann das optische Signal aus einer Umgebung des Kraftfahrzeugs auf den Sensor fallen. Insbesondere ist das Wärmeleitelement dazu ausgebildet, Wärme aus einem Innenraum des Kraftfahrzeugs zwischen die Scheibe und das Sensorgehäuse zu leiten. Mit anderen Worten ist das Wärmeleitelement dazu ausgebildet, Wärme aus dem Innenraum im Bereich des Sensorgehäuses in die Scheibe zu leiten. Das Wärmeleitelement kann dazu ausgebildet sein, Wärme aus dem Innenraum des Kraftfahrzeugs in den Zwischenraum zwischen Sensorgehäuse und Scheibe zu leiten. Die Wärme aus dem Innenraum des Kraftfahrzeugs kann beispielsweise durch eine Lüftung, ein Gebläse und/oder eine Standheizung des Kraftfahrzeugs erzeugt werden.

Ein dritter Aspekt der Erfindung betrifft ein Verfahren zum Betreiben einer Sensoranordnung für ein Kraftfahrzeug, wobei ein Sensorgehäuse der Sensoranordnung an einer Seite der Scheibe derart angeordnet ist, dass zwischen dem Sensorgehäuse und der Scheibe ein Zwischenraum gebildet ist, in welchem der optische Sensor angeordnet ist. Erfindungsgemäß wird Wärme aus einem Innenraum des Kraftfahrzeugs mittels eines spezifisch für die Wärmeleitung vorgesehenen Wärmeleitelements zwischen das Sensorgehäuse und die Scheibe geleitet. Insbesondere handelt es sich bei der Sensoranordnung und/oder dem Kraftfahrzeug um die oben beschriebene Sensoranordnung beziehungsweise das oben beschriebene Kraftfahrzeug.

Zu der Erfindung gehören Weiterbildungen des erfindungsgemäßen Verfahrens, die Merkmale aufweisen, wie sie bereits im Zusammenhang mit den Weiterbildungen der erfindungsgemäßen Sensoranordnung oder des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden sind Ausführungsbeispiele der Erfindung beschrieben. Hierzu zeigt:
- Fig. 1: in einer schematischen Seitenansicht ein Kraftfahrzeug mit einer Sensoranordnung;
- Fig. 2: die Sensoranordnung aus einer schematischen Perspektivansicht.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

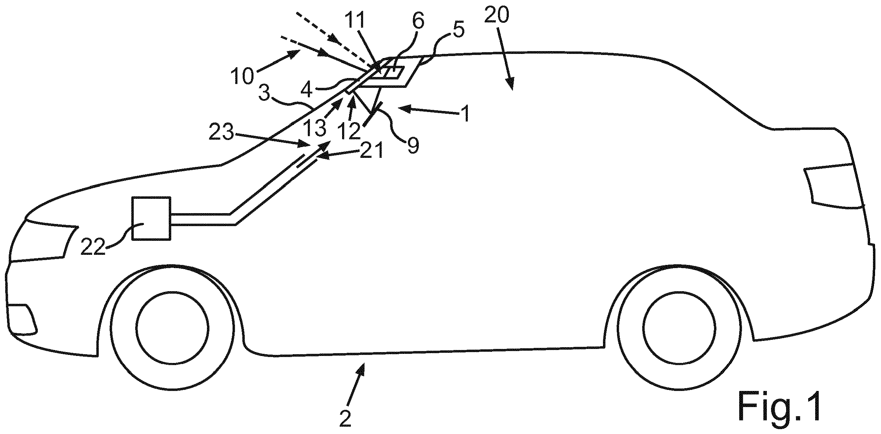

Fig. 1 zeigt ein Kraftfahrzeug 2 mit einer Sensoranordnung 1. Die Sensoranordnung 1 umfasst eine Scheibe 3 und ein Sensorgehäuse 5 mit einem optischen Sensor 6. Das Sensorgehäuse 6 ist auf eine Seite 13 der Scheibe 3 angeordnet und bildet zusammen mit der Scheibe 3 einen Zwischenraum 11. Die Seite 13 der Scheibe 3 ist vorliegend bezogen auf das Kraftfahrzeug 2 eine Innenseite der Scheibe 3. Der optische Sensor 6 ist an dem Zwischenraum 11 angeordnet. Die Scheibe 3 ist vorliegend als Frontscheibe beziehungsweise Windschutzscheibe des Kraftfahrzeugs 2 ausgebildet. In anderen in den Fig. nicht gezeigte Ausführungsformen kann die Scheibe 3 eine beliebige andere Scheibe, beispielsweise eine Seitenscheibe oder eine Heckscheibe, ausbilden.

Vorliegend ist an dem Sensorgehäuse 5 zusätzlich ein Rückspiegel 9 des Kraftfahrzeugs 2 angeordnet. Somit ist das Sensorgehäuse 5 vorliegend multifunktional nach Art einer Konsole ausgebildet. Beispielsweise kann das Sensorgehäuse 5 alternativ oder zusätzlich Bedienelemente, Beleuchtungselemente und/oder Fächer zum Bereitstellen von Stauraum aufweisen.

Bei dem optischen Sensor 6 handelt es sich beispielsweise um eine Kamera, einen Lidar-Sensor oder einen Infrarotsensor. Ein optisches Signal 10, beispielsweise sichtbares Licht, Infrarotstrahlung oder ein reflektierter Laserstrahl, trifft durch die Scheibe 3 durch auf den optischen Sensor 6. Der optische Sensor 6 ist insbesondere dazu ausgebildet, das optische Signal 10 zu erfassen. Durch die Bildung von Eis, insbesondere auf einer Außenseite der Scheibe 3, oder ein Beschlagen der Scheibe 3, insbesondere der Seite 13 im Bereich des Sensors 6, könnte die Funktionsfähigkeit des optischen Sensors 6 beeinträchtigt werden. Beispielsweise könnte das optische Signal 10 verfälscht oder an der Transmission hin zum optischen Sensor 6 gehindert werden.

Durch ein Gebläse 21 des Kraftfahrzeugs 2 kann die Scheibe 3 von Eis und Beschlägen befreit werden. Insbesondere wird das Gebläse 21 von einer Heizeinrichtung 22, beispielsweise einer Standheizung oder einem Wärmetauscher, der in Verbindung mit einem Kühlmittel eines Motors des Kraftfahrzeugs steht, mit erwärmter Luft 23 versorgt. Aufgrund des Sensorgehäuses 6 kann Luft aus einem Innenraum 20 des Kraftfahrzeugs 2 in einem Bereich 12, in dem das Sensorgehäuse 6 an der Scheibe 3 angeordnet ist, nicht zirkulieren. Somit kann die Scheibe 3 in dem Bereich 12 nicht durch die erwärmte Luft 23 im Innenraum 20 des Kraftfahrzeugs 2 erwärmt werden. Insbesondere kann die Scheibe 3 in dem Bereich 12 nicht durch das Gebläse 21 enteist werden. Gerade in dem Bereich 12 ist ein Enteisen der Scheibe 3 jedoch besonders wichtig, um die Funktionsfähigkeit des optischen Sensors 6 zu gewährleisten.

Um den Bereich 12 der Scheibe 3 mittels der erwärmten Luft 23 beheizbar zu machen, weist die Sensoranordnung 1 ein Wärmeleitelement 4 auf. Das Wärmeleitelement 4 ist auf der Seite 13, vorliegend der Innenseite, der Scheibe 3 angeordnet. Insbesondere ist das Wärmeleitelement 4 zwischen der Scheibe 3 und dem Sensorgehäuse 5 angeordnet. Das Wärmeleitelement 4 ermöglicht eine Wärmeleitung von Wärme aus dem Innenraum 20 in den Bereich 12 der Scheibe 3. Insbesondere ermöglicht das Wärmeleitelement 4 eine Wärmeleitung von der erwärmten Luft 23 hinzu im Bereich 12 der Scheibe. Somit kann der Bereich 12 der Scheibe 3, in dem das Sensorgehäuse 5 die Luftzirkulation verhindert, aufgrund des Wärmeleitelements 4 dennoch indirekt durch die erwärmte Luft 23 beziehungsweise die Heizeinrichtung 22 erwärmt werden. Die Heizeinrichtung 22 ist insbesondere zum Erwärmen für das Gebläse 21 ausgebildet.

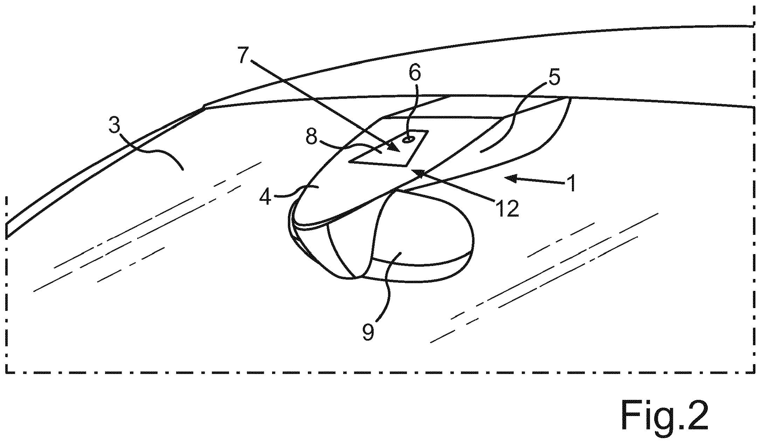

Die Anordnung des Wärmeleitelements 4 zwischen Scheibe 3 und Sensorgehäuse 5 ist in Fig. 2 besonders gut ersichtlich. Das Wärmeleitelement 4 weist eine Aussparung auf, die nicht durch das Wärmeleitelement 4 bedeckt ist. Die Aussparung des Wärmeleitelements 4 bildet eine Eintrittsfläche 7, durch welche das optische Signal 10 auf den optischen Sensor 6 fällt. Die Eintrittsfläche 7 ist vorliegend nicht mit dem Wärmeleitelement 4 bedeckt.

Der Zwischenraum 11 ist durch das Sensorgehäuse 5, die Scheibe 3 und das Wärmeleitelement 4 vorliegend vollständig abgedichtet. Somit kann kein Schmutz und keine Feuchtigkeit aus dem Innenraum 20 in den Zwischenraum 11 dringen. Dadurch kann das Beschlagen der Scheibe 3 an dem Zwischenraum 11 wirksam vermieden werden. Außerdem kann eine Verschmutzung des optischen Sensors 6 vermieden werden.

Das Wärmeleitelement 4 ist intransparent und blickdicht ausgeführt. Somit können das optische Signal 10 und/oder sichtbares Licht das Wärmeleitelement 4 nicht transmittieren. Dadurch kann einerseits ein Erfassungsbereich des optischen Sensors 6 durch Position, Lage und Größe des Wärmeleitelements 4 vorgegeben sein. Andererseits können Elektronik und/oder Sensorik sowie ungleichmäßige Spaltmaße am Sensorgehäuse 5 verdeckt werden. Dadurch kann eine optische Aufwertung des Kraftfahrzeugs 2 erzielt werden. Somit weist das Wärmeleitelement 4 mehrere unterschiedliche Funktionen auf.

An der Eintrittsfläche 7 kann ein weiteres, transparentes Wärmeleitelement 8 angeordnet sein. Beispielsweise handelt es sich bei dem weiteren Wärmeleitelement 8 um eine dünne Metallschicht, insbesondere Silber, welche für sichtbares Licht und/oder das optische Signal 10 transparent ist. Auf diese Weise kann der Bereich 12 der Scheibe 3 besonders gut erwärmt und somit enteist werden.

Beispielsweise ist das Wärmeleitelement 4 auf die Seite 13 der Scheibe 3 aufgedampft. Ein Material, aus dem das Wärmeleitelement 4 gebildet ist, weist eine höhere Wärmeleitfähigkeit auf als ein Material, aus dem die Scheibe 3 gebildet ist. Die Scheibe ist vorzugsweise aus einem Glas gebildet. Das Wärmeleitelement 4 ist vorzugsweise zumindest teilweise aus Metall gebildet. Beispielsweise ist das Wärmeleitelement 4 durch eine auf die Scheibe 3 aufgedampfte Metallschicht, insbesondere Silberschicht, gebildet. Alternativ oder zusätzlich kann das Wärmeleitelement 4 eine wärmeleitende Folie umfassen. Das Wärmeleitelement 4 muss nicht wie vorliegend flächig ausgeführt sein, sondern kann durch mehrere Wärmeleitstreifen ausgebildet sein, welche zwischen Scheibe 3 und Sensorgehäuse 5 angeordnet sind. Zuletzt kann es vorgesehen sein, einen Lack, der aus dem Stand der Technik zum Lackieren der Scheibe 3 bekannt ist, durch Beigabe von Partikeln hoher Wärmeleitfähigkeit, insbesondere höherer Wärmeleitfähigkeit als der Lack selbst und/oder die Scheibe 3, an einen Verwendungszweck als das Wärmeleitelement 4 anzupassen. Diesem Fall kann das Wärmeleitelement 4 durch den Lack in Zusammenwirken mit den Partikeln gebildet sein.

Insgesamt zeigen die Beispiele, wie durch die Erfindung ein Enteisen der Scheibe 3 in einem Bereich des Sensorgehäuses 6 besonders einfach und kostengünstig ermöglicht werden kann. Insbesondere sind hierzu keine aktiven Elemente, beispielsweise Heizelemente, an der Sensoranordnung 1 nötig. Durch Inbetriebnahme einer Standheizung als Heizeinrichtung 22 kann die Eisfreiheit der Scheibe 3 besonders frühzeitig vor Fahrtantritt gewährleistet werden.

## Patentansprüche

1. Sensoranordnung (1) für ein Kraftfahrzeug (2), mit
- einer Scheibe (3),
- einem Sensorgehäuse (5) und,
- einem optischen Sensor (6),
- wobei das Sensorgehäuse (5) an einer Innenseite (13) der Scheibe (3) derart angeordnet ist, dass
- zwischen dem Sensorgehäuse (5) und der Scheibe (3) ein Zwischenraum (11) gebildet ist, in welchem der optische Sensor (6) angeordnet ist,
**dadurch gekennzeichnet, dass**
- zwischen dem Sensorgehäuse (5) und der Innenseite (13) der Scheibe (3) ein Wärmeleitelement (4) angeordnet ist, um Wärme aus einem Innenraum (20) des Kraftfahrzeugs (2) in den Zwischenraum (11) zwischen Sensorgehäuse (5) und die Scheibe (3) zu leiten,
- die gesamte Sensoreinrichtung kein Heizelement aufweist, an welches allein zu Heizzwecken eine elektrischen Spannung angelegt werden kann, wobei
der Zwischenraum (11) durch das Sensorgehäuse (5), die Scheibe (3) und das Wärmeleitelement (4) abgedichtet ist.

2. Sensoranordnung (1) nach Anspruch 1,
**dadurch gekennzeichnet, dass**
ein Material, insbesondere Metall, aus dem das Wärmeleitelement (4) gebildet ist, einen größeren Wärmeleitkoeffizienten als ein Material, aus dem die Scheibe (3) gebildet ist, aufweist.

3. Sensoranordnung (1) nach einem der vorhergehenden Ansprüche,
**dadurch gekennzeichnet, dass**
das Wärmeleitelement (4) intransparent ist.

4. Sensoranordnung (1) nach Anspruch 3,
**dadurch gekennzeichnet, dass**
das Wärmeleitelement (4) als Blickschutz ausgebildet ist, welcher einen Blick durch die Scheibe (3) nur bereichsweise verhindert.

5. Sensoranordnung (1) nach einem der vorhergehenden Ansprüche,
**dadurch gekennzeichnet, dass**
das Wärmeleitelement (4) auf die Innenseite (13) der Scheibe (3) aufgedampft ist.

6. Sensoranordnung (1) nach einem der vorhergehenden Ansprüche,
**dadurch gekennzeichnet, dass**
- der optische Sensor (6) ausgebildet ist, ein optisches Signal (10), insbesondere Licht, welches durch eine Eintrittsfläche (7) der Scheibe (3) auf den optischen Sensor (6) fällt, zu erfassen, wobei
- die Eintrittsfläche (7) von dem Wärmeleitelement (4) ausgespart ist.

7. Sensoranordnung (1) nach Anspruch 6,
**dadurch gekennzeichnet, dass**
die Eintrittsfläche (7) ein weiteres, transparentes Wärmeleitelement (8) aufweist.

8. Kraftfahrzeug (2) mit einer Sensoranordnung (1) nach einem der vorhergehenden Ansprüche,
**dadurch gekennzeichnet, dass**
das Sensorgehäuse (5) mit dem optischen Sensor (6) bezogen auf das Kraftfahrzeug (2) auf einer Innenseite der Scheibe (3) angeordnet ist.

9. Verfahren zum Betreiben einer Sensoranordnung (1) für ein Kraftfahrzeug (2), wobei ein Sensorgehäuse (5) der Sensoranordnung (1) an einer Innenseite (13) der Scheibe (3) derart angeordnet ist, dass zwischen dem Sensorgehäuse (5) und der Scheibe (3) ein Zwischenraum (11) gebildet ist, in welchem der optische Sensor (6) angeordnet ist,
**dadurch gekennzeichnet, dass**
- Wärme aus einem Innenraum (20) des Kraftfahrzeugs (2) mittels eines spezifisch für die Wärmeleitung vorgesehenen Wärmeleitelements (4) zwischen das Sensorgehäuse (5) und die Scheibe (3) geleitet wird, wobei
- die gesamte Sensoreinrichtung kein Heizelement aufweist, an welches allein zu Heizzwecken eine elektrischen Spannung angelegt wird,
- der Zwischenraum (11) durch das Sensorgehäuse (5), die Scheibe (3) und das Wärmeleitelement (4) abgedichtet wird.

## Claims

1. Sensor arrangement (1) for a motor vehicle (2), having
- a pane (3),
- a sensor housing (5) and
- an optical sensor (6),
- wherein the sensor housing (5) is disposed on an inner side (13) of the pane (3) such that
- between the sensor housing (5) and the pane (3), a gap (11) is formed in which the optical sensor (6) is disposed,
**characterised in that**
- between the sensor housing (5) and the inner side (13) of the pane (3), a heat conducting element (4) is disposed in order to conduct heat from an interior space (20) of the motor vehicle (2) into the gap (11) between the sensor housing (5) and the pane (3),
- the entire sensor apparatus does not have a heating element to which an electrical voltage can be applied solely for heating purposes, wherein
the gap (11) is sealed by the sensor housing (5), the pane (3) and the heat conducting element (4).

2. Sensor arrangement (1) according to claim 1,
**characterised in that**
a material, in particular metal, from which the heat conducting element (4) is formed, has a greater thermal conductivity coefficient than a material from which the pane (3) is formed.

3. Sensor arrangement (1) according to any of the preceding claims,
**characterised in that**
the heat conducting element (4) is non-transparent.

4. Sensor arrangement (1) according to claim 3,
**characterised in that**
the heat conducting element (4) is configured as a privacy screen which prevents a view through the pane (3) only in certain areas.

5. Sensor arrangement (1) according to any of the preceding claims,
**characterised in that**
the heat conducting element (4) is applied by vapour deposition to the inner side (13) of the pane (3).

6. Sensor arrangement (1) according to any of the preceding claims,
**characterised in that**
- the optical sensor (6) is configured to detect an optical signal (10), in particular light, which impinges through an entry surface (7) of the pane (3) onto the optical sensor (6), wherein
- the entry surface (7) is recessed from the heat conducting element (4).

7. Sensor arrangement (1) according to claim 6,
**characterised in that**
the entry surface (7) has a further, transparent heat conducting element (8).

8. Motor vehicle (2) having a sensor arrangement (1) according to any of the preceding claims,
**characterised in that**
the sensor housing (5), together with the optical sensor (6), is disposed on an inner side of the pane (3) with respect to the motor vehicle (2).

9. Method for operating a sensor arrangement (1) for a motor vehicle (2), wherein a sensor housing (5) of the sensor arrangement (1) is disposed on an inner side (13) of the pane (3) such that between the sensor housing (5) and the pane (3), a gap (11) is formed in which the optical sensor (6) is disposed, **characterised in that**
- heat from an interior space (20) of the motor vehicle (2) is conducted between the sensor housing (5) and the pane (3) by means of a heat conducting element (4) specifically provided for heat conduction, wherein
- the entire sensor apparatus does not have a heating element to which an electrical voltage is applied solely for heating purposes,
- the gap (11) is sealed by the sensor housing (5), the pane (3) and the heat conducting element (4).

## Revendications

1. Dispositif capteur (1) pour un véhicule automobile (2), comprenant
- une vitre (3),
- un boîtier de capteur (5) et,
- un capteur optique (6),
- dans lequel le boîtier de capteur (5) est agencé sur un côté intérieur (13) de la vitre (3) de telle manière que
- entre le boîtier de capteur (5) et la vitre (3) est formé un espace intermédiaire (11) dans lequel est disposé le capteur optique (6),
**caractérisé en ce que**
- un élément conducteur de chaleur (4) est agencé entre le boîtier de capteur (5) et le côté intérieur (13) de la vitre (3) afin de guider de la chaleur provenant d'un habitacle (20) du véhicule automobile (2) dans l'espace intermédiaire (11) entre le boîtier du capteur (5) et la vitre (3),
- le dispositif capteur complet ne comporte aucun élément chauffant auquel une tension électrique peut être appliquée uniquement à des fins de chauffage, dans lequel
l'espace intermédiaire (11) est rendu étanche par le boîtier de capteur (5), la vitre (3) et l'élément conducteur de chaleur (4).

2. Dispositif capteur (1) selon la revendication 1,
**caractérisé en ce que**
un matériau, en particulier du métal, à partir duquel l'élément conducteur de chaleur (4) est formé, présente un coefficient de conductivité thermique plus élevé qu'un matériau à partir duquel la vitre (3) est formée.

3. Dispositif capteur (1) selon l'une quelconque des revendications précédentes, **caractérisé en ce que**
l'élément conducteur de chaleur (4) est opaque.

4. Dispositif capteur (1) selon la revendication 3,
**caractérisé en ce que**
l'élément conducteur de chaleur (4) est conçu sous la forme d'un pare-vue, qui n'empêche que partiellement une vue à travers la vitre (3).

5. Dispositif capteur (1) selon l'une quelconque des revendications précédentes, **caractérisé en ce que**
l'élément conducteur de chaleur (4) est déposé par vaporisation sur le côté intérieur (13) de la vitre (3).

6. Dispositif capteur (1) selon l'une quelconque des revendications précédentes, **caractérisé en ce que**
- le capteur optique (6) est conçu pour détecter un signal optique (10), en particulier de la lumière, qui tombe à travers une surface d'entrée (7) de la vitre (3) sur le capteur optique (6), dans lequel
- la surface d'entrée (7) de l'élément conducteur de chaleur (4) est évidée.

7. Dispositif capteur (1) selon la revendication 6,
**caractérisé en ce que**
la surface d'entrée (7) présente un élément conducteur de chaleur transparent supplémentaire (8).

8. Véhicule automobile (2) comprenant un dispositif capteur (1) selon l'une quelconque des revendications précédentes,
**caractérisé en ce que**
le boîtier de capteur (5) comprenant le capteur optique (6) est agencé sur un côté intérieur de la vitre (3) par rapport au véhicule automobile (2).

9. Procédé de fonctionnement d'un dispositif capteur (1) pour un véhicule automobile (2), dans lequel un boîtier de capteur (5) du dispositif capteur (1) est agencé sur un côté intérieur (13) de la vitre (3) de telle manière qu'un espace intermédiaire (11) est formé entre le boîtier de capteur (5) et la vitre (3), dans lequel le capteur optique (6) est agencé, **caractérisé en ce que**
- de la chaleur provenant d'un habitacle (20) du véhicule automobile (2) est conduite entre le boîtier de capteur (5) et la vitre (3) au moyen d'un élément conducteur de chaleur (4) spécifiquement prévu pour une conduction de chaleur, dans lequel
- le dispositif capteur complet ne comporte aucun élément chauffant auquel une tension électrique est appliquée uniquement à des fins de chauffage,
- l'espace intermédiaire (11) est fermé par le boîtier de capteur (5), la vitre (3) et l'élément conducteur de chaleur (4).
